# EUROPEAN PATENT APPLICATION

(11) **EP 2 399 719 A1**
(43) Date of publication of application: **28.12.2011**
(21) Application number: 10166979.4
(22) Date of filing: 23.06.2010
(51) Int. Cl.: B29B 17/02, B29C 45/14

(54) **Method to recover polystyrene from recycled refrigerators**

(71) Applicant: TOTAL PETROCHEMICALS RESEARCH FELUY, 7181 Seneffe (Feluy) (BE)
(72) Inventor: Kervyn de Meerendre, Tanguy, 1640 Rhode-Saint-Genèse (BE); Montagne, Philippe, 1180 Bruxelles (BE); Plantefeve-Castryck, Tim, 9831 Deurle (BE)
(74) Representative: Neel, Henry

(57) **Abstract**

The present invention is a method to recover polystyrene from recycled refrigerators comprising :
a) providing a first recycling zone in which refrigerators are treated to recover the refrigerant gas and then grinded to recover various plastic and metallic parts,
b) at the entrance of the first recycling zone, removing the polystyrene parts of the refrigerator which are not in contact with the insulation foam and sending them to a second recycling zone,
c) treating said polystyrene parts in said second recycling zone by washing and grinding to get polystyrene flakes,
d) optionally checking by any means that the flakes contain no prohibited substance to get the qualification of polystyrene of a specific purity in accordance with the absence of said prohibited substances,
e) optionally providing a styrene polymerization unit comprising at least a vessel containing liquid styrene to be polymerized and at least a vessel containing melted polystyrene made from said styrene, and sending the above flakes to the vessel containing liquid styrene or to the vessel containing melted polystyrene, or both to convert the flakes to virgin polystyrene.

The polystyrene parts of the refrigerator are made of a polystyrene food contact. The polystyrene parts of the refrigerator which are not in contact with the insulation foam are not contaminated, these parts are essentially the drawers but can be any other parts e.g. the egg boxes, the banners, the shelves and the butter boxes.

In an embodiment of the invention at step d) the specific purity qualification is the food contact.

## Description

### [Field of the invention]

The present invention is a method to recover polystyrene (PS) from recycled refrigerators. "Refrigerator", in the present invention has to be understood as (i) an apparatus having a compartment at about 4°C and a compartment at -18°C or even as low as about -30°C or as (ii) an apparatus (freezer) having one or more compartments at -18°C or even as low as about -30°C. More precisely the recycled polystyrene comes from the PS parts of the refrigerator which are not in contact with the insulation foam. These parts are essentially the drawers. The liner of a refrigerator is in contact on one side with the food inside the refrigerator and on the other side with the insulation foam. Said insulation foam is typically a polyurethane foam.

### [Background of the invention]

EP 1747870 A1 relates to a method and equipment for recycling plastic material, particularly plastic material combined with materials of a different nature, such as the one deriving from the recycling either of household appliances or other composite products in general, such as refrigerators, microwave ovens, air-conditioners, computers, telephones and other electronic materials. At [0009] is mentionned : ".... In this sense, a particularly problematic case lies in the recycling of refrigerators. These products include both metallic (particularly iron, steel, copper, aluminium) materials and plastic materials of a various nature. A predominant part in terms of volume among the plastic materials is the foamed polyurethane (used for the insulation), but considerable amounts by weight of other materials capable to be recovered, such as for example polystyrene, are also present. However, a problem connected with the recovery of these materials is the fact that they are contaminated by tacky residues, because the refrigerator manufacturers spread suitable adhesives over the polystyrene sheets in order to make the assembling of the different parts easier. These tacky residues are difficult to be removed and are one of the main contaminants of the recovery polystyrene, which prevents the latter from being reused for high-quality applications...". In this prior art there is no selection of a specific polystyrene part.

EP 1747823 A1 relates to a cryo-treating method and equipment for recycling systems of various materials, particularly plastic material combined with materials of a different nature, such as the one deriving from the recycling either of household appliances or other composite products. More particularly, it relates to a method for recycling a composite product such as a refrigerator or the like, comprising a grinding step of said composite product in grinding means (1) for providing a composite material with generation of condensable polluting gases and a condensing step in condensing means (4) of said condensable polluting gases, wherein said condensing step is carried out by an inert coolant, characterized in that said inert coolant flowing from said condensing means (4) in the aeriform state is recycled in said grinding means (1). In this prior art there is no selection of a specific polystyrene part.

EP 1473071 A1 relates to a method and system for purifying exhaust gas, especially a solvent-containing exhaust gas from refrigerator recycling, wherein the dried, pressurized exhaust gas is cryogenically condensed, the condensed components are separated from the remaining exhaust gas, the cold and purified pressurized exhaust gas is passed through an adsorber to adsorbe the remaining condensed components, the adsorber is purged with a warmed gas stream, namely either a warmed inert gas stream or the purified exhaust gas respectively at reduced pressure, and the desorbed gas is recycled.

GB 2383761 A describes a process for the removal of ozone depleting substances (ODS) from foam insulating material of refrigerator equipment carcasses. Refrigerators are first degassed in order to remove ODS from the compressor unit and the compressor and its ancillaries removed from the carcass of the refrigerator for recycling before cutting off the top and bottom with a fine bladed bandsaw, so that disturbance to the foam at this stage is minimal. The top and bottom sections can be separately treated in an embodiment of the same process. Nothing is mentionned about polystyrene recovery.

US 2008-190819 relates to a method for separating differently additivated polymers based on polystyrene, the copolymers and/or blends thereof. Said method is used in particular when recycling flame-retardant plastic materials, in particular from old electrical appliances. The method according is characterised by a density separation with at least one liquid or gaseous separation medium.

It has now been discovered that in the course of the recycling of refrigerators specific polystyrene parts can be removed before the recycling of the refrigerator to recover polystyrene flakes of a specific quality.

### [Brief summary of the invention]

The present invention is a method to recover polystyrene from recycled refrigerators comprising :
a) providing a first recycling zone in which refrigerators are treated to recover the refrigerant gas and then grinded to recover various plastic and metallic parts,
b) at the entrance of the first recycling zone, removing the polystyrene parts of the refrigerator which are not in contact with the insulation foam and sending them to a second recycling zone,
c) treating said polystyrene parts in said second recycling zone by washing and grinding to get polystyrene flakes,
d) optionally checking by any means that the flakes contain no prohibited substance to get the qualification of polystyrene of a specific purity in accordance with the absence of said prohibited substances,
e) optionally providing a styrene polymerization unit comprising at least a vessel containing liquid styrene to be polymerized and at least a vessel containing melted polystyrene made from said styrene, and sending the above flakes to the vessel containing liquid styrene or to the vessel containing melted polystyrene, or both to convert the flakes to virgin polystyrene.

The polystyrene parts of the refrigerator are made of a polystyrene food contact. The polystyrene parts of the refrigerator which are not in contact with the insulation foam are not contaminated, these parts are essentially the drawers but can be any other parts e.g. the egg boxes, the banners, the shelves and the butter boxes.

In an embodiment of the invention at step d) the specific purity qualification is the food contact.

### [Detailed description of the invention]

**As regards the first recycling zone A,** It is known in itself and already described in the prior art. The polystyrene parts of the refrigerator which are not in contact with the insulation foam are not contaminated. At the entrance of said first recycling zone it is easy to remove the drawers as any other part not in contact with the insulation foam. In this step a check is advantageously made to take only the polystyrene parts. The drawers and said other parts are sent to the second recycling zone.

**As regards the second recycling zone,** in this zone the polystyrene parts are grinded and washed in any order. They can be partially grinded, then washed, regrindred to flakes. They can also be washed before grinding. The flakes can be of any size. Usually the flakes can be of about 0.5 to about 3 cm. The flakes can be also smaller, similar as pellets. The washing can be made by any means in one or more steps with one or more washing liquors. By way of example such washing is described in GB 1 552 118, the content of which is incorporated in the present description.

**As regards step d),** one can cite as specific purity the food contact. It has to be checked that prohibited substances are not present in the flakes from this second recycling zone be qualified "food contact" in the sense of most regulations. Examples of the prohibited substances are bisphenols, epoxy derivatives, asbestos, pthalates, cholorofluorocarbons, organotin compounds, dioxins, GMO's, polybromodiphenylethers, SVHC's. This is in accordance with rule 67/548/EC, 76/769/EC, 88/378/EC, 2002/95/EC, 2004/781 /EC, 2005/717/EC, 2002/72/EC, 2004/1/EC, 2004/19/EC, 2005/79/EC, 2007/19/EC, 2008/39/EC.

**As regards step e),** the process to make polystyrene is known and has been described in a lot of prior arts. Styrene, optionally with a comonomer but without rubber is polymerized to make crystal PS (also known as GPPS general purpose polystyrene). Styrene, optionally with a comonomer but with rubber is polymerized to make HiPS (High Impact Polystyrene). The process for making HIPS is well known to those skilled in the art and consists of polymerizing styrene monomer in the presence of dissolved rubber. Polymerization of styrene, and optionally a comonomer, is initiated by heating and/or by an initiator, by way of example a radical initiator. The rubber is "dissolved" in the styrene monomer (actually the rubber is infinitely swollen with the monomer). The usual rubber types utilized in the manufacture of HIPS include polybutadiene (PB), styrene-butadiene rubber (SBR), and styrene-butadiene-styrene rubber (SBS). Polystyrene is initially formed from the styrene monomer within the homogeneous rubber solution in styrene. At the beginning of the polymerization the reacting solution is at a point prior to the rubber/styrene inversion point, i.e. the point at which the solution being reacted goes from polystyrene particles in a rubber/styrene monomer matrix to rubber particles in a polystyrene matrix. When the degree of polymerization is about equal to the weight % of rubber in the system, it inverts e.g. the styrene/styrene polymer phase becomes continuous and the rubber phase becomes discontinuous. Styrene is polymerized around and within the rubber particles which leads to polystyrene inclusions in the rubber particles. A portion of the styrene is polymerized by grafting on the rubber, another portion is homopolymerized, said portion is referred to as a "non-grafting" polymerization. In HIPS a part of the styrene may be replaced by unsaturated monomers copolymerizable with styrene such as other monovinylaromatic monomers, alkyl esters of acrylic or methacrylic acid and acrylonitrile. The same mechanism of "grafting" and "non-grafting" occurs with the styrene comonomer, which means one portion of the styrene and of the comonomer are polymerized by grafting on the rubber, another portion of the styrene and of the comonomer are copolymerized. The properties of HIPS are related to the amount of rubber, the type of rubber, the rubber particles size as well as the polystyrene included in the rubber particles. The proportion of styrene, and the optional comonomer, which is grafted (polymerized by the "grafting" way) is linked to the functionalization of the rubber. The process to make GPPS is similar but without rubber.

The flakes recovered at step c) and d) can be introduced at any part of the process of GPPS or HiPS synthesis. In an embodiment the flakes can be melted in an extruding machine and introduced at any part of the process of GPPS or HiPS synthesis.

## Claims

1. Method to recover polystyrene from recycled refrigerators comprising:
a) providing a first recycling zone in which refrigerators are treated to recover the refrigerant gas and then grinded to recover various plastic and metallic parts,
b) at the entrance of the first recycling zone, removing the polystyrene parts of the refrigerator which are not in contact with the insulation foam and sending them to a second recycling zone,
c) treating said polystyrene parts in said second recycling zone by washing and grinding to get polystyrene flakes,
d) optionally checking by any means that the flakes contain no prohibited substance to get the qualification of polystyrene of a specific purity in accordance with the absence of said prohibited substances,
e) optionally providing a styrene polymerization unit comprising at least a vessel containing liquid styrene to be polymerized and at least a vessel containing melted polystyrene made from said styrene, and sending the above flakes to the vessel containing liquid styrene or to the vessel containing melted polystyrene, or both to convert the flakes to virgin polystyrene.

2. Method according to claim 1 wherein the polystyrene parts of the refrigerator which are not in contact with the insulation foam are selected among the drawers the egg boxes, the banners, the shelves and the butter boxes.

3. Method according to claim 1 or 2 wherein the step d) is mandatory.

4. Method according to any one of the preceding claims wherein in step d) the specific purity qualification is the food contact.
